Europäisches Patentamt

European Patent Office

Office européen des brevets

(19)

(11) Publication number: **0 309 985**
**A2**

(12) **EUROPEAN PATENT APPLICATION**

(21) Application number: 88115879.4

(22) Date of filing: 27.09.88

(51) Int. Cl.⁴: **G06F 9/38**

(30) Priority: 28.09.87 US 102053

(43) Date of publication of application:
05.04.89 Bulletin 89/14

(84) Designated Contracting States:
AT BE CH DE ES FR GB GR IT LI LU NL SE

(71) Applicant: **Compaq Computer Corporation**
**20555 FM 149**
**Houston Texas 77070(US)**

(72) Inventor: **Culley, Paul R.**
**13010 Marron Drive**
**Cypress Texas 77429(US)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Galileiplatz 1**
**Postfach 86 06 20**
**D-8000 München 86(DE)**

(54) Executing code from slow rom on high speed computer compatible with slower speed computers.

(57) A method is described for deselecting pipelining when a processor is executing code from slow read-only memory in a system comprising a 32-bit processor, a high speed 32-bit bus, and a lower speed, 8 or 16-bit bus.

EP 0 309 985 A2

# EXECUTING CODE FROM SLOW ROM ON HIGH SPEED COMPUTER COMPATIBLE WITH SLOWER SPEED COMPUTERS

Pipelining is a technique for increasing the speed of a computer processor (CPU). Typically, when a CPU fetches an instruction from memory, it puts out an address on the system bus and the memory responds by placing the contents of the memory location having that address on the data lines of the bus. When a processor is fetching a sequence of instructions from memory, a speed increase can be realized by having the memory system signal the processor that it is ready to accept another address even though the data from the previous request is still in the process of being put out onto the bus. This process is called pipelining.

On the Intel 80386 microprocessor, pipelining is accomplished by having the memory (or cache controller) set the Next Address (NA) flag. Conversely, pipelining may be disabled (not selected) by changing the NA flag to the opposite logical condition (high or low, as the case may be).

## SLOW ROM

### Executing Code From Slow ROM On A 80386/82385 Cache 80286-Based Compatible

In many current applications for computers utilizing the Intel 80286 as a central processor unit (CPU), a bus adapter contains a ROM to provide a BIOS interface for the adapter. These ROM's were originally designed to operate on 4.77 MHz 8088-based PC's, and later upgraded to allow operation on 8-MHz 80286-based machines. In some cases the code in these ROM's contains tight timing sequences to monitor hardware devices (like watching for a video scan line to change on a video monitor interface). These code sequences barely work on the slower machines.

With the advent of 80386 processors operating at 16 and 20 MHz, it would seem that there should be no problem with speed related operations. It turns out that this is not so. For compatibility reasons, the 80386 machines must have bus translators to convert from the 32-bit bus to the 8/16-bit 80286 compatible bus. This hardware converts 32-bit requests to the appropriate number and type of 16 or 8 bit operations as required.

The speed problem (in operating with 80386) is caused by several things. First of all, the CPU fetches code in 32-bit double words, unlike the 80286 (which always fetches 16-bits). Thus even for a single fetch, the bus converter must get twice as much data to satisfy the CPU. Secondly, the design of the 80386 instruction decode mechanism, which acts as a pipeline decoding and executing several instructions at once, actually takes slightly longer to complete a single instruction from when it is first received. This is because the instruction pipeline and queue is optimized for long linear sequences of code. During the time that the instruction is being decoded, the bus unit will begin prefetching another double word. For example take the following code sequence.

```
INAGAIN:   IN      al,dx       ;1 byte
           Test    al,1        ;2 bytes
           JNZ     inagain     ;2 bytes
```

The total code sequence require a minimum of 5 bytes to be fetched. On the 8088 CPU, the bus unit would have fetched the needed five bytes plus one or two more (fetched by the prefetcher while executing the instructions). On the 80386, the CPU (when operated in pipeline mode) fetches 4 double words for the same sequence, which, when converted to 8-bit operations for the 8-bit bus takes about three times as long. With the 82385 cache controller present, and the code memory set up as non-cacheable (all fetches are misses), the combined pair of the 82385 and 80386 fetches 5 double words for the code sequence taking about five times as long as an 8088. This is because the cache controller tells the CPU to go ahead and start another cycle sooner than the bus conversion logic would. The cycle must complete once started; if it had not been started so soon, the CPU would not have started it at all because it would have realized that

2

the fetch was not necessary.

In many applications that have been observed using this and other "tight" code sequences, the extra time taken by the extra double word fetch is the "straw that breaks the camel's back".

Some potential solutions to this problem are:

1. Turn off pipelining altogether. This has a small but real performance penalty.

2. Set the ROM's to be cacheable. This allows the code loop to go to full speed after the first execution and seems to fix the problem as well as improving the performance of the system. The problem with this is identifying the location of the ROM's as opposed to other user installed hardware. While it is possible to do this with software, it is not currently possible to implement a hardware mechanism to remember what the software finds and respond on each cycle with a cacheable/non-cacheable status (the time allotted with the 82385 at 20 MHz is 8 nsec).

3. Copy the ROM's to RAM and replace the ROM's with the RAM through address mapping hardware. This is expensive and has other problems.

A preferred way to solve the problem is to not have the CPU pipelined during address accesses to the memory space occupied by the slow ROM's. This prevents the CPU from getting so far ahead of itself and prevents the fetching of the extra double word.

The pipelining is controlled by the NA* signal back to the CPU from the cache controller. In normal operation with the 32-bit cacheable memory the difference in performance between pipelining and not pipelining is small (1 to 2% in favor of pipelining) but as we want all the performance possible, we chose to maintain it except when necessary to operate from the slow ROM's.

The following is a preferred equation for the programmable array logic (PAL) used to decode the address space for pipelining. 'NAO' is the Next Address signal from the cache controller and 'NA' is the output to the CPU.

A18-A23 are address lines and "512K" and "640K" are hardware switch settings selected depending on the amount of RAM installed. A Boolean "or" operation is indicated as " + "; a Boolean "and" operation is indicated as "*"; and, "/" indicates "not" (i.e., an inversion of the designated signal).

```
NA = NAO * /A19 * /A18    ;GOOD FOR 00000000-0003FFFFH
   + NAO * /A19 * 512K    ;GOOD FOR 00000000-0007FFFFH
   + NAO * /A18 * 640K    ;GOOD FOR 00080000-0009FFFFH
   + NAO *  A20           ;following good for
                          00100000-00FFFFFFH
   + NAO *  A21
   + NAO *  A22
   + NAO *  A23
```

Claims

1. A method of adjusting the timing of code fetches in a computer system having a microprocessor which may optionally operate in a pipelined mode of address accesses to a memory space, a high-speed bus and at least one lower-speed bus and a bus translator to convert data from the high speed bus to a lower-speed bus and read-only-memory in a portion of the memory space containing timing sequences which comprises selecting the non-pipelined mode of address accesses for the microprocessor during address accesses to the memory space occupied by the read-only-memory.